# FASCICULE DE BREVET EUROPEEN

(11) **EP 4 132 826 B1**
(45) Date de publication et mention de la délivrance du brevet: **06.11.2024**
(21) Numéro de dépôt: 21713980.7
(22) Date de dépôt: 25.03.2021
(51) Int. Cl.: B60W 30/18, B60W 60/00

(54) **PROCÉDÉ ET SYSTÈME D'AIDE À LA CONDUITE**
VERFAHREN UND SYSTEM ZUR FAHRUNTERSTÜTZUNG
METHOD AND SYSTEM FOR ASSISTING WITH DRIVING

(30) Priorité: 06.04.2020 FR 2003407
(43) Date de publication de la demande: 15.02.2023
(73) Titulaire: Ampere SAS, 92100 Boulogne-Billancourt (FR)
(72) Inventeur: GIACCONE, Thierry, 31470 Fonsorbes (FR)
(74) Mandataire: Renault Group
(86) Numéro de dépôt international: PCT/EP2021/057837
(87) Numéro de publication internationale: WO 2021/204559

(56) Documents cités:
- DE-A1- 102018 204 185
- FR-A1- 3 014 580
- US-A1- 2014 142 799
- US-B2- 9 576 083

## Description

### Domaine technique

L'invention concerne de manière générale les systèmes de contrôle et en particulier un procédé et un système d'aide à la conduite pour véhicules.

### Art Antérieur

L'automatisation des véhicules a connu un essor majeur ces dernières années pour améliorer la sécurité routière et optimiser la conduite des véhicules. Les véhicules automatisés ou semi-automatisés, comme par exemple les véhicules autonomes et connectés, utilisent des systèmes de contrôles pour contrôler le fonctionnement du véhicule en fonction d'informations mesurées par des capteurs embarqués sur les véhicules.

Les véhicules automatisés, tels que les véhicules autonomes et connectés utilisés dans les systèmes ITS (Intelligent Transport Systems), sont ainsi équipés de systèmes d'aide à la conduite tels que des systèmes ADAS (acronyme pour « Advanced driver-assistance systems ») ou des systèmes AD (acronyme pour « autonomous driving »).

De tels systèmes d'aide à la conduite peuvent utiliser diverses applications de contrôle telles qu'une application de changement de voie automatique pour aider le conducteur à changer de file, une application d'aide au maintien dans la voie pour détecter si le véhicule franchit accidentellement un marquage au sol, une application de régulation de vitesse (ACC) et/ou une application d'avertissement de collision imminente.

Les systèmes de transports intelligents coopératifs mettent en oeuvre une infrastructure et des dispositifs véhiculaires connectés pour accroître la sécurité routière et rendre les transports plus sûrs, plus efficaces, et plus durables. Des recherches sur des véhicules autonomes capables de se déplacer d'un point de départ à un point d'arrivée sans l'intervention du conducteur ont été aussi activement menées.

Les véhicules autonomes peuvent être amenés à prendre des décisions qui vont permettre d'établir les manoeuvres précises à mettre en oeuvre pour gérer des situations, appelées « situations de négociation », comme l'insertion d'un véhicule dans une voie, l'entrée d'un véhicule dans une autoroute ou dans une voie rapide, et l'entrée d'un véhicule dans un rond-point. L'une des difficultés dans la gestion des situations de négociation est l'anticipation du comportement routier des autres voitures pour déterminer la manoeuvre à mettre en oeuvre la plus appropriée possible, tout en garantissant la sécurité du véhicule et la compatibilité de la manoeuvre avec le trafic routier rencontré.

Une technique permettant de caractériser le comportement routier du conducteur d'un véhicule à proximité a été proposée dans la demande de brevet US9576083 B2. Cette technique permet l'intégration de véhicules dans un réseau de véhicules autonomes grâce à une modélisation automatique des conducteurs. Cette technique repose sur une méthode mise en oeuvre par ordinateur permettant d'identifier les types de comportement associés à la conduite d'un véhicule situé dans le voisinage d'un véhicule autonome, afin de créer un modèle de conduite relatif au conducteur. L'identification du comportement se fait à travers les différents capteurs embarqués sur le véhicule autonome tels que des caméras, des capteurs ultrasons, et des radars. Les données collectées par ces capteurs sont transmises, par l'ordinateur de bord du véhicule autonome, à un serveur distant via un réseau cellulaire, pour créer un modèle de comportement. Les données collectées sont associées à la plaque d'immatriculation du véhicule identifié. Le modèle de comportement créé est enregistré dans le serveur et est utilisé pour mettre à jour les modèles existants précédemment enregistrés dans le serveur. Au niveau du serveur, les données collectées sont associées à la plaque d'immatriculation de chaque véhicule détecté. Le modèle de comportement mis à jour est ensuite utilisé par le véhicule autonome qui pourra prendre une décision de manoeuvre adéquate en cas de négociation en fonction de ce modèle de comportement routier. DE 10 2018 204 185 A concerne un système d'assistance à la conduite et un procédé pour assister un conducteur d'un véhicule automobile dans une situation de conduite dans laquelle le véhicule automobile interagit avec un autre usager de la route.

Bien que les technologies d'aide à la conduite existantes améliorent le confort de conduite et offrent une assistance à la conduite, ces technologies présentent des limitations et ne permettent pas une aide à la conduite efficace et sécurisée, en particulier pour les véhicules autonomes en situation de négociation.

Il existe donc un besoin pour un procédé et un système d'aide à la conduite capables d'assister les véhicules dans les situations de négociation tout en réduisant les risques de collision et en augmentant la sécurité du véhicule.

### Définition Générale de l'invention

L'invention vient améliorer la situation. A cet effet, l'invention fournit un procédé d'aide à la conduite d'un véhicule client lors de la détection d'une situation de circulation courante dans un contexte horaire courant, notamment défini par une information de date et d'heure, le procédé étant caractérisé en ce qu'il comprend les étapes consistant à :
- identifier un ensemble de véhicules environnants situés dans une zone de voisinage du véhicule client ;
- déterminer un identifiant associé à chaque véhicule environnant;
- transmettre une requête de caractérisation du comportement routier de chaque véhicule environnant à un serveur d'aide à la conduite, la requête de caractérisation comprenant l'identifiant associé à chaque véhicule environnant, la situation de circulation courante, et le contexte horaire courant ;
- déterminer un score de comportement routier en association avec chaque identifiant en utilisant une base de données de scores de comportements routiers, chaque score de comportement routier dans la base de données étant associé à un identifiant de véhicule, à une situation de circulation donnée et à un contexte horaire donné;
- déterminer une manoeuvre de conduite en fonction des scores de comportements routiers associés aux identifiants des véhicules environnants.

Selon certains modes de réalisation, l'identifiant associé à chaque véhicule environnant peut être déterminé en appliquant une fonction cryptographique à un numéro de plaque d'immatriculation associé au véhicule environnant.

Selon certains modes de réalisation, la base de données de scores de comportements routiers peut comprendre au moins un score de comportement routier strictement positif, l'étape de détermination d'un score de comportement routier incluant les étapes suivantes :
- déterminer le score de comportement routier comme étant le score de comportement enregistré dans la base de données si un score de comportement routier y est associé à l'identifiant dudit véhicule environnant et à la situation de circulation courante ;
- associer une valeur prédéfinie au score de comportement routier si aucun score de comportement routier n'est associé dans la base de données audit identifiant et à la situation de circulation courante.

Selon certains modes de réalisation, le véhicule client peut être un véhicule connecté disposant d'une technologie de communication véhicule-à-véhicule et l'ensemble de véhicules environnants peuvent comprendre au moins un véhicule environnant connecté disposant d'une technologie de communication véhicule-à-véhicule et d'une technologie de communication véhicule-à-infrastructure, le procédé comprenant une étape pour transmettre, par le véhicule environnant connecté audit véhicule client, un score de comportement routier dudit véhicule environnant connecté ayant une valeur différente de ladite valeur prédéfinie, en utilisant une communication véhicule-à-véhicule.

Selon certains modes de réalisation, le procédé peut comprendre une étape d'auto-caractérisation du véhicule environnant connecté pour déterminer ledit score de comportement routier en association avec un identifiant dudit véhicule environnant connecté, l'étape d'auto-caractérisation comprenant les sous-étapes consistant à :
- déterminer un identifiant associé au véhicule environnant connecté en appliquant une fonction cryptographique à un numéro de plaque d'immatriculation associé au véhicule environnant connecté ;
- transmettre une requête de caractérisation du comportement routier du véhicule environnant connecté au serveur d'aide à la conduite, la requête de caractérisation comprenant l'identifiant associé au véhicule environnant connecté, ladite situation courante et ledit contexte horaire courant ;
- déterminer un score de comportement routier associé audit véhicule environnant connecté en utilisant ladite base de données.

Selon certains modes de réalisation, l'étape de détermination du score de comportement routier associé audit véhicule environnant connecté peut comprendre les étapes suivantes:
- déterminer ledit score de comportement routier comme étant le score de comportement enregistré dans ladite base de données si un score de comportement routier y est associé audit identifiant dudit véhicule environnant connecté et à la situation courante ;
- associer une valeur prédéfinie audit score de comportement routier si aucun score de comportement routier n'est associé dans la base de données audit identifiant et à la situation de circulation courante

Selon certains modes de réalisation, la base de données peut être préalablement déterminée, ladite base de données de scores de comportements routiers comprenant au moins un score de comportement routier associé à un identifiant relatif à un véhicule identifié par un véhicule de référence dans une situation de circulation donnée et un contexte horaire donné, l'étape de détermination de ladite base de données comprenant les étapes consistant à :
- déterminer une valeur correspondant au comportement du véhicule identifié dans la situation de circulation donnée et le contexte horaire donné, ladite valeur étant positive ou négative ;
- déterminer un identifiant en association avec le véhicule identifié en appliquant une fonction cryptographique à un numéro de plaque d'immatriculation du véhicule identifié;
- transmettre une caractérisation du comportement routier du véhicule identifié dans la situation donnée et le contexte horaire donné au serveur d'aide à la conduite, la caractérisation comprenant ladite valeur, l'identifiant associé audit véhicule identifié, la situation de circulation donnée, et le contexte horaire donné ;
- déterminer un score de comportement routier associé audit identifiant du véhicule identifié dans la situation donnée et le contexte horaire donné en fonction de ladite valeur, ledit score de comportement routier étant déterminé :
- en mettant à jour un score de comportement routier déjà enregistré dans la base de données en association avec ledit identifiant et ladite situation de circulation donnée, ledit score de comportement routier déjà enregistré étant additionné à ladite valeur et étant seuillé par la valeur nulle;
- en créant un nouvel enregistrement dans la base de données si ladite valeur est positive et aucun score de comportement routier associé audit identifiant n'est enregistré dans la base de données, le score de comportement routier associé audit identifiant, à la situation de circulation donnée et au contexte horaire donné étant égal à ladite valeur.

Selon certains modes de réalisation, la situation de circulation donnée peut être une situation de circulation identifiée parmi un groupe comprenant l'insertion dans une voie, et/ou l'entrée dans une autoroute, et/ou l'entrée dans une voie rapide, et/ou l'entrée dans un rond-point.

Les modes de réalisation de l'invention fournissent en outre un système d'aide à la conduite comprenant un véhicule client et un serveur d'aide à la conduite, le système étant caractérisé en ce que ledit véhicule client est configuré pour :
- identifier un ensemble de véhicules environnants situés dans une zone de voisinage du véhicule client dans une situation de circulation courante et un contexte horaire courant notamment défini par une information de date et d'heure;
- déterminer un identifiant associé à chaque véhicule environnant;
- transmettre une requête de caractérisation du comportement routier de chaque véhicule environnant au serveur d'aide à la conduite, la requête de caractérisation comprenant l'identifiant associé à chaque véhicule environnant, la situation de circulation courante, et le contexte horaire courant ;
- recevoir un score de comportement routier associé à chaque identifiant, ledit score de comportement routier étant déterminé par ledit serveur d'aide à la conduite 102 en utilisant une base de données de scores de comportements routiers;
- déterminer une manoeuvre de conduite en fonction des scores de comportements routiers associés aux identifiants desdits véhicules environnants.

Avantageusement, les modes de réalisation de l'invention permettent d'anticiper le comportement routier des véhicules environnants à un véhicule client, ce qui permet au véhicule client d'effectuer une manoeuvre appropriée, sécuritaire, et compatible avec le trafic routier rencontré.

Avantageusement, les modes de réalisation de l'invention permettent de faciliter la prise de décision dans les situations de négociation rencontrées par les véhicules autonomes en offrant le moyen d'identifier les véhicules susceptibles de laisser passer le véhicule autonome.

Avantageusement, les modes de réalisation de l'invention permettent une caractérisation efficace des comportements routiers en considérant la caractérisation du comportement routier des véhicules par situation de circulation et par contexte horaire notamment défini par une information de date et d'heure.

Avantageusement, les modes de réalisation de l'invention permettent un échange sécurisé des informations permettant la caractérisation des véhicules en utilisant un cryptage du numéro de la plaque d'immatriculation des véhicules environnants à un véhicule client.

Avantageusement, les modes de réalisation de l'invention permettent la caractérisation uniquement positive du comportement routier de l'ensemble de véhicules à l'aide des autres véhicules et l'exploitation des résultats de caractérisation afin de faciliter les décisions de véhicules clients. La caractérisation uniquement positive des comportements routiers permet de renforcer la fiabilité de l'information, ce qui est primordial dans le cadre de la voiture autonome.

Avantageusement, les modes de réalisation de l'invention permettent de résoudre les cas de négociation difficiles à gérer par les véhicules autonomes, les manoeuvres en résultant permettant de réduire les risques de collision et de participer à l'augmentation de la sécurité des usagers de la route.

### Brève description des dessins

D'autres caractéristiques, détails et avantages de l'invention ressortiront à la lecture de la description faite en référence aux dessins annexés donnés à titre d'exemple et qui représentent, respectivement :
[Fig.1] La Figure 1 est un schéma représentant un exemple d'environnement d'un système de transport intelligent dans lequel peut être implémenté le procédé et le système d'aide à la conduite, selon certains modes de réalisation de l'invention.
[Fig. 2] La Figure 2 est un logigramme représentant un procédé d'aide à la conduite, selon certains modes de réalisation de l'invention.
[Fig. 3] La Figure 3 est un logigramme représentant une étape de détermination d'une base de données de scores de comportements routiers, selon certains modes de réalisation de l'invention.

### Description détaillée

Les modes de réalisation de l'invention fournissent un procédé et un système d'aide à la conduite pour un véhicule client (un véhicule qui requiert l'aide à la conduite) lors de la détection d'une situation de circulation courante dans un contexte horaire courant, notamment défini par une information de date et d'heure. Le véhicule client est un véhicule connecté opérant dans un système de transport intelligent et requérant l'assistance à la conduite à un serveur d'aide à la conduite.

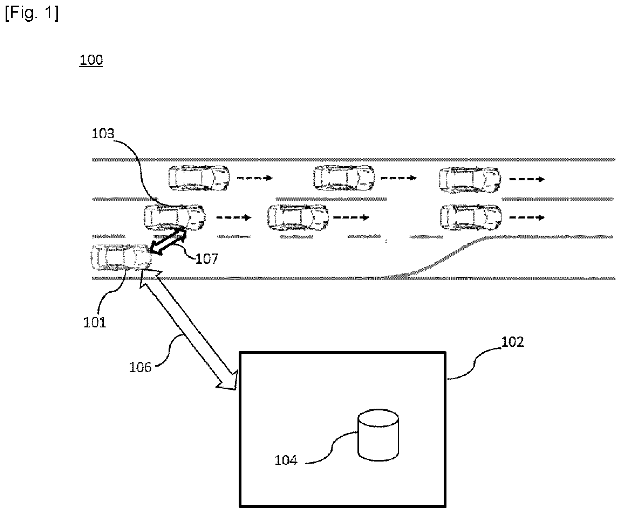

La figure 1 représente un exemple d'environnement d'un système de transport intelligent 100 selon certains modes de réalisation de l'invention dans lequel peuvent être utilisés le procédé et le système d'aide à la conduite pour fournir une assistance à la conduite à un véhicule client 101, le véhicule client 101 communicant dans le système de transport intelligent 100 avec un serveur d'aide à la décision 102 via une communication sans fil 106.

Le système de transport intelligent 100 peut être utilisé pour différentes applications dans le domaine des transports. Les principaux domaines d'application du système de transport intelligent 100 comprennent sans limitation :
- la sécurité routière pour assister les conducteurs et permettre de diminuer le nombre d'accidents et donc le nombre de victimes des accidents de la route ainsi que les dégâts matériels ;
- la mobilité et l'efficacité des transports en mettant à disposition des conducteurs des données sur l'état du système de transport et des conditions de trafic pour permettre de diminuer le temps de transport et d'améliorer la fiabilité dans le temps de parcours ;
- les services d'information et les services de confort à valeur ajoutée en mettant à disposition des services envers le conducteur et les passagers leur permettant de réaliser des tâches personnelles pendant leurs transports.

Selon certains modes de réalisation, le véhicule client 101 peut comprendre un ensemble de fonctionnalités et un ensemble de dispositifs embarqués pour mettre en oeuvre ces fonctionnalités. En particulier, le véhicule client 101 peut comprendre des moyens de traitement, de communication, et des technologies de capteurs et d'interface homme/machine. Le véhicule client 101 peut être configuré pour traiter les informations reçues de son environnement et échanger des informations en temps réel avec le serveur 102 et/ou au moins un véhicule connecté dans le système de transport intelligent 100.

Selon certains modes de réalisation, le véhicule client 101 dispose de capteurs appropriés à la détection de véhicules, à la reconnaissance de leurs plaques d'immatriculation et à la détection de certains évènements comme par exemple l'activation des clignotants. En particulier, le véhicule client 101 peut disposer de capteurs et/ou de radars adaptés pour permettre une perception vers l'avant et/ou vers l'arrière et/ou sur les côtés.

Selon certains modes de réalisation, le véhicule client 101 peut disposer de capteurs comprenant, sans limitation, des capteurs de pluie et des capteurs jour/nuit.

Selon certains modes de réalisation, les données provenant des capteurs embarqués dans le véhicule client 101 peuvent comprendre la vitesse (dans le cas d'une unité embarquée d'un véhicule), la direction, la température, l'état des airbags, des données provenant des caméras anticollision, des données provenant des radars de parkings, des données provenant des émetteurs/récepteurs ultra-sons, et les numéros des plaques d'immatriculation des véhicules environnants au véhicule 101 dans le système de transport intelligent 100.

Selon certains modes de réalisation, les moyens de communication du véhicule client 101 peuvent comprendre des technologies avec différentes caractéristiques (ex. taux de transmission, portée, puissance d'émission, bandes de fréquence, etc.). Les moyens de communications peuvent être équipés d'un ou plusieurs émetteurs/récepteurs à bord pour établir une ou plusieurs liaisons sans fil avec d'autres entités du système de transport intelligent 100: d'autres véhicules, le serveur 102, des unités de bord de route, ou des postes/centres de contrôle. Les communications entre le véhicule client 101 et les entités du système de transport intelligent 100 peuvent être directes ou indirectes (par exemple via des stations relais comme les unités de bord de route).

En référence à la figure 1, les modes de réalisation de l'invention fournissent un système d'aide à la conduite comprenant le véhicule client 101 et le serveur d'aide à la conduite 102, le système étant caractérisé en ce que le véhicule client 101 est configuré pour :
- identifier un ensemble de véhicules environnants situés dans une zone de voisinage du véhicule client 101 à une situation de circulation courante et un contexte horaire courant défini par une information de date et d'heure;
- déterminer un identifiant associé à chaque véhicule environnant en appliquant une fonction cryptographique à un numéro de plaque d'immatriculation associé au véhicule environnant;
- transmettre une requête de caractérisation du comportement routier de chaque véhicule environnant au serveur d'aide à la conduite 102, la requête de caractérisation comprenant l'identifiant associé à chaque véhicule environnant, la situation de circulation courante, et le contexte horaire courant ;
- recevoir un score de comportement routier associé à chaque identifiant, le score de comportement routier étant déterminé par le serveur d'aide à la conduite 102 en utilisant une base de données de scores de comportements routiers, la base de données de scores de comportements routiers préalablement déterminée par le serveur d'aide à la conduite 102 comprenant au moins un score de comportement routier strictement positif, un score de comportement routier étant associé à un identifiant associé à un véhicule, à une situation de circulation donnée et à un contexte horaire donné;
- déterminer une manoeuvre de conduite en fonction des scores de comportements routiers associés aux identifiants des véhicules environnants.

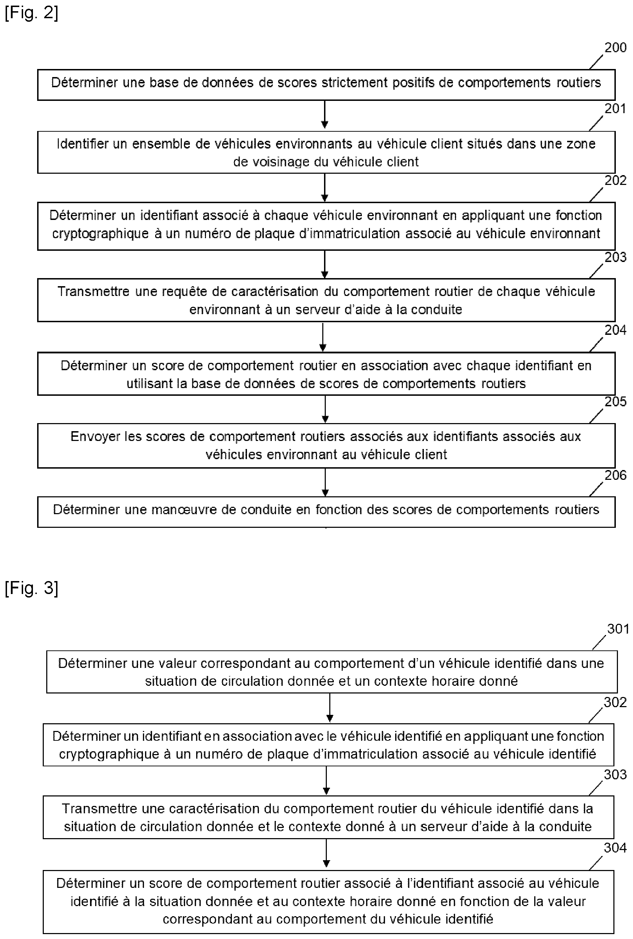

En référence à la figure 2, les modes de réalisation de l'invention fournissent en outre un procédé d'aide à la conduite d'un véhicule client lors de la détection d'une situation de circulation courante dans un contexte horaire courant, notamment défini par une information de date et d'heure. Le procédé d'aide à la conduite selon les modes de réalisation de l'invention permet d'assister les algorithmes de prise de décision du véhicule client 101 de manière à pouvoir anticiper le comportement routiers des véhicules environnants au véhicule client 101 dans le système de transport intelligent 100. L'anticipation des comportements routiers des véhicules environnants au véhicule client 101 se base, selon les modes de réalisation de l'invention, sur la construction d'une base de données de scores de comportements routiers 104 qui permet d'associer à chaque véhicule identifié dans le système de transport intelligent 100, un score strictement positif de comportement routier qui reflète le bon comportement du véhicule dans une situation donnée et un contexte horaire donné.

A l'étape 200, une base de données 104 de scores strictement positifs de comportements routiers peut être déterminée, un score de comportement routier étant associé à un identifiant associé à un véhicule identifié à une situation de circulation donnée et à un contexte horaire donné, la base de données étant sauvegardée dans le serveur d'aide à la conduite 102.

A l'étape 201, un ensemble de véhicules environnants situés dans une zone de voisinage du véhicule client 101 peut être identifié par le véhicule client 101 en identifiant les numéros des plaques d'immatriculation des véhicules environnants.

A l'étape 202, un identifiant associé à chaque véhicule environnant peut être déterminé par le véhicule client 101 en appliquant une fonction cryptographique à un numéro de plaque d'immatriculation associé à chaque véhicule environnant.

Selon certains modes de réalisation, la fonction cryptographique peut être une fonction de hashage.

A l'étape 203, une requête de caractérisation du comportement routier de chaque véhicule environnant peut être transmise du véhicule client 101 au serveur d'aide à la conduite 102, la requête de caractérisation comprenant l'identifiant associé à chaque véhicule environnant déterminé à l'étape 202, la situation de circulation courante, et le contexte horaire courant.

A l'étape 204, un score de comportement routier peut être déterminé par le serveur d'aide à la conduite 102 en association avec chaque identifiant en utilisant la base de données des scores de comportements routiers.

Plus précisément, l'étape 204 de détermination de scores de comportements routiers peut consister à déterminer un score de comportement routier en association avec un identifiant d'un véhicule identifié à la situation courante et au contexte horaire courant, l'étape 204 comprenant les étapes consistant à :
- déterminer le score de comportement routier associé au véhicule identifié comme étant le score de comportement enregistré dans la base de données 104 si un score de comportement routier y est associé à l'identifiant du véhicule identifié et à la situation de circulation, et
- associer une valeur prédéfinie au score de comportement routier en association avec l'identifiant du véhicule identifié si aucun score de comportement routier n'est associé dans la base de données 104 audit identifiant et à la situation de circulation courante. La valeur prédéfinie peut être une valeur quelconque prédéfinie par le serveur d'aide à la conduite 102 pour désigner un comportement routier indéfini qui peut correspondre à un mauvais comportement routier.

Selon certains modes de réalisation, l'étape 204 peut comprendre la détermination du score de comportement routier en association avec un identifiant associé à un véhicule identifié en tenant compte du contexte horaire courant. En d'autres termes, l'étape 204 peut en outre comprendre une étape consistant à déterminer, si un score de comportement associé à l'identifiant associé au véhicule identifié à une situation de circulation donnée correspondante à la situation courante et à un contexte horaire donné correspondant au contexte horaire courant, est déjà enregistré dans la base de données 104 de scores de comportements routiers. Cette étape permet avantageusement de raffiner la caractérisation du comportement routier des véhicules environnants au véhicule client 101.

A l'étape 205, les scores de comportements routiers associés aux identifiants associés aux véhicules environnants du véhicule client 101 peuvent être transmis du serveur d'aide à la conduite 102 au véhicule client 101.

A l'étape 206, une manoeuvre de conduite peut être déterminée par le véhicule client 101 en fonction des scores de comportements routiers associés aux identifiants relatifs aux véhicules environnants au véhicule client 101.

Selon certains modes de réalisations, le véhicule client 101 peut être un véhicule connecté disposant au moins d'une technologie de communication véhicule-à-véhicule et les véhicules environnants du véhicule client 101 peuvent comprendre au moins un véhicule connecté 103 disposant d'une technologie de communication véhicule-à-véhicule et d'une technologie de communication véhicule-à-infrastructure. Selon ces modes de réalisation, le véhicule environnant connecté 103 peut être configuré pour effectuer son auto-caractérisation moyennant une communication véhicule-à-infrastructure avec le serveur d'aide à la conduite 102, et de communiquer son score de comportement routier reçu du serveur d'aide à la conduite 102, au véhicule client 101, moyennant une communication véhicule-à-véhicule.

Selon ces modes de réalisation, le procédé peut en outre comprendre une étape d'auto-caractérisation du véhicule environnant 103 (non illustrée dans la figure 2) pour déterminer un score de comportement routier en association avec un identifiant associé au véhicule environnant 103, l'étape comprenant les sous-étapes consistant à :
- déterminer, par le véhicule environnant 103, un identifiant associé au véhicule environnant 103 en appliquant une fonction cryptographique à un numéro de plaque d'immatriculation associé au véhicule environnant 103;
- transmettre, du véhicule environnant 103 au serveur d'aide à la conduite 102, une requête de caractérisation du comportement routier du véhicule environnant 103 (une requête d'auto-caractérisation), la requête de caractérisation comprenant l'identifiant associé au véhicule environnant 103, la situation courante et le contexte horaire courant ;
- déterminer, par le serveur d'aide à la conduite 102, un score de comportement routier associé au véhicule environnant 103 en utilisant la base de données 102 de scores de comportements routiers.

Plus précisément, l'étape de détermination du score de comportement routier associé au véhicule environnant 103 peut consister à effectuer les étapes consistant à :
- déterminer si un score de comportement routier, associé à l'identifiant associé au véhicule environnant 103, à une situation de circulation donnée correspondante à la situation courante, est enregistré dans la base de données 104 de scores de comportements routiers;
- déterminer le score de comportement routier comme étant le score de comportement enregistré dans la base de données 104 si un score de comportement routier associé à l'identifiant associé au véhicule environnant 103 à la situation courante est enregistré dans la base de données 104;
- associer une valeur prédéfinie au score de comportement routier si aucun score de comportement routier associé à l'identifiant associé au véhicule environnant 103 et à une situation de circulation donnée correspondante à la situation de circulation courante n'est enregistré dans la base de données 104 de scores de comportements routiers.

Selon certains modes de réalisation, l'étape d'auto-caractérisation du véhicule environnant 103 peut comprendre la détermination du score de comportement routier en association avec l'identifiant associé au véhicule environnant 103 en tenant compte du contexte horaire courant. En d'autres termes, l'étape d'auto-caractérisation du véhicule environnant 103 peut en outre comprendre une étape consistant à déterminer, si un score de comportement associé à l'identifiant associé au véhicule environnant 101 à une situation de circulation donnée correspondante à la situation courante et à un contexte horaire donné correspondant au contexte horaire courant, est déjà enregistré dans la base de données 104 de scores de comportements routiers. Cette étape permet avantageusement de raffiner la caractérisation du comportement routier du véhicule environnant 103.

Selon certains modes de réalisation, le procédé peut en outre comprendre une étape (non illustrée dans la figure 2) pour transmettre, du véhicule environnant 103 au véhicule client 101 et aux véhicules voisinant dans le système de transport intelligent 100, le score de comportement routier associé à l'identifiant du véhicule environnant 103 si ledit score est différent de la valeur prédéfinie.

La figure 3 est un logigramme représentant l'étape 200 de détermination de la base de données 104 de scores de comportements routiers selon certains modes de réalisation de l'invention. La base de données 104 comprend au moins un score de comportement routier associé à un identifiant associé à un véhicule identifié par un véhicule de référence dans une situation de circulation donnée et un contexte horaire donné.

Selon certains modes de réalisation, le véhicule de référence dispose de capteurs appropriés à la détection de véhicules, à la reconnaissance de leurs plaques d'immatriculation et à la détection de certains évènements comme par exemple l'activation des clignotants. En particulier, le véhicule de référence peut disposer de capteurs et/ou de radars adaptés pour permettre une perception vers l'avant et/ou vers l'arrière et/ou sur les côtés. Selon certains modes de réalisation, le véhicule de référence peut en outre disposer de capteurs comprenant, sans limitation, des capteurs de pluie et des capteurs jour/nuit.

A l'étape 301, une valeur correspondant au comportement du véhicule identifié à la situation donnée et au contexte horaire donné peut être déterminée par le véhicule de référence, la valeur étant positive ou négative. Une valeur positive désigne un bon comportement routier (par exemple l'activation systématique de clignotant pour rentrer dans un rond-point et/ou en sortir) et une valeur négative désigne un mauvais comportement routier (par exemple un forçage de passage, des coups de freins répétitifs, l'absence de clignotant, une courte distance de sécurité, la circulation sur la voie de gauche sur autoroute).

Selon certains modes de réalisation, une situation donnée observée peut être une situation de négociation observée par un véhicule de référence qui peut être un véhicule autonome ou non autonome (contrôlé manuellement par un conducteur) disposant de capteurs et/ou de technologies d'aide à la conduite appropriés, une situation de négociation pouvant par exemple correspondre à l'insertion dans une voie, ou à l'insertion dans un rond-point. Par exemple, lorsque le véhicule de référence s'insère dans une voie, il peut être configuré à détecter et mémoriser qu'un véhicule l'a laissé passer en déterminant une valeur positive au comportement de ce véhicule. Dans un autre exemple, lorsque le véhicule de référence souhaite s'insérer dans un rond-point saturé et qu'un véhicule dans le rond-point laisse le passage, le véhicule de référencer peut déterminer une valeur positive correspondant à ce véhicule. Dans un autre exemple, lorsque le véhicule précédant le véhicule de référence active systématiquement le clignotant pour rentrer dans un rond-point et/ou en sortir, le véhicule de référence peut déterminer une valeur positive à ce véhicule.

A l'étape 302, un identifiant associé au véhicule identifié par le véhicule de référence peut être déterminé par le véhicule de référence en appliquant une fonction cryptographique à un numéro de plaque d'immatriculation associé au véhicule identifié.

A l'étape 303, une caractérisation du comportement routier du véhicule identifié dans la situation donnée et le contexte horaire donné peut être transmise du véhicule de référence à un serveur d'aide à la conduite 102, la caractérisation comprenant la valeur déterminée à l'étape 301, l'identifiant associé au véhicule identifié déterminé à l'étape 302, la situation de circulation donnée, et le contexte horaire donné. Les valeurs positives permettent d'incrémenter les scores de comportements routiers pour une situation de circulation donnée et pour un véhicule donné identifié par l'identifiant déterminé à partir du numéro de sa plaque d'immatriculation.

A l'étape déterminer 304, un score de comportement routier associé à l'identifiant associé au véhicule identifié dans la situation donnée et le contexte horaire donné peut être déterminé par le serveur d'aide à la conduite 102 en fonction de la valeur, le score de comportement routier étant déterminé :
- en mettant à jour un score de comportement routier déjà enregistré dans la base de données 104 en association avec l'identifiant associé au véhicule identifié et à la situation de circulation donnée, le score de comportement routier déjà enregistré étant additionné à la valeur et étant seuillé par la valeur nulle;
- en créant un nouvel enregistrement dans la base de données 104 si la valeur correspondant au comportement du véhicule identifié à la situation donnée et au contexte horaire donné est positive et aucun score de comportement routier associé à l'identifiant associé au véhicule identifié n'est enregistré dans la base de données 104, le score de comportement routier associé à l'identifiant associé au véhicule identifié par le véhicule de référence dans la situation de circulation donnée et au contexte horaire donné étant égal à la valeur correspondant au comportement du véhicule déterminée à l'étape 301.

Selon certains modes de réalisation, la technologie utilisée pour assurer la communication entre les différentes entités dans le système de transport intelligent 100 comprenant la communication véhicule-à-véhicule entre le véhicule client 101 et au moins un véhicule 103 et la communication véhicule-à-infrastructure entre le véhicule client 101 et le serveur d'aide à la conduite 102 peut être choisie dans un groupe comprenant, à titre d'exemple non limitatif, la technologie ITS-G5, n'importe quelle technologie d'accès sans fil dérivée des réseaux cellulaires (par exemple les réseaux 2G, 3G, 4G, LTE, LTE-V2X, la future génération 5G), la technologie Li-Fi (acronyme de 'Light Fidelity' en langue anglo-saxonne) utilisant la lumière comme support de transmission des données, et les réseaux satellites. La technologie ITS-G5 peut être hybridée avec les réseaux cellulaires. Les technologies d'accès sans fil peuvent en outre comprendre les technologies d'accès à courte portée, les technologies d'accès ad-hoc (par exemple la norme WLAN 5 GHz, la norme 5.9 GHz ITS, et la norme WiFi^{™}), les technologies d'accès sans fil à haut débit (par exemple la technologie WiMax), les technologies numérique à large bande, l'infra-rouge, et les réseaux de capteurs.

Selon certains modes de réalisation, une situation de circulation peut être une situation de circulation identifiée parmi un groupe comprenant l'insertion dans une voie, et/ou l'entrée dans une autoroute, et/ou l'entrée dans une voie rapide, et/ou l'entrée dans un rond-point.

Selon certains modes de réalisation, le contexte horaire peut permettre de corréler si la situation de circulation se passe dans un horaire habituellement à forte circulation, à une data qui correspond à un jour férié ou un samedi ou un dimanche ou à une période de vacances scolaires. L'heure peut aussi déterminer un contexte jour ou nuit, qui peut aussi être obtenu par un capteur jour/nuit.

En général les routines exécutées pour mettre en oeuvre les modes de réalisation de l'invention, qu'elles soient mises en oeuvre dans le cadre d'un système d'exploitation ou d'une application spécifique, d'un composant, d'un programme, d'un objet, d'un module ou d'une séquence d'instructions, ou même d'un sous-ensemble de ceux-là, peuvent être désignées comme "code de programme informatique" ou simplement "code de programme". Le code de programme comprend typiquement des instructions lisibles par ordinateur qui résident à divers moments dans des dispositifs divers de mémoire et de stockage dans un ordinateur et qui, lorsqu'elles sont lues et exécutées par un ou plusieurs processeurs dans un ordinateur, amènent l'ordinateur à effectuer les opérations nécessaires pour exécuter les opérations et/ou les éléments propres aux aspects variés des modes de réalisation de l'invention. Les instructions d'un programme, lisibles par ordinateur, pour réaliser les opérations des modes de réalisation de l'invention peuvent être, par exemple, le langage d'assemblage, ou encore un code source ou un code objet écrit en combinaison avec un ou plusieurs langages de programmation.

## Revendications

1. Procédé d'aide à la conduite d'un véhicule client lors de la détection d'une situation de circulation courante dans un contexte horaire courant, notamment défini par une information de date et d'heure, le procédé étant **caractérisé en ce qu'**il comprend les étapes consistant à :
- identifier (201) un ensemble de véhicules environnants situés dans une zone de voisinage dudit véhicule client ;
- déterminer (202) un identifiant associé à chaque véhicule environnant;
- transmettre (203) une requête de caractérisation du comportement routier de chaque véhicule environnant à un serveur d'aide à la conduite, ladite requête de caractérisation comprenant l'identifiant associé à chaque véhicule environnant, la situation de circulation courante, et le contexte horaire courant ;
- déterminer (204) un score de comportement routier en association avec chaque identifiant en utilisant une base de données de scores de comportements routiers, chaque score de comportement routier dans la base de données étant associé à un identifiant de véhicule, à une situation de circulation donnée et à un contexte horaire donné;
- déterminer (206) une manoeuvre de conduite en fonction des scores de comportements routiers associés aux identifiants desdits véhicules environnants.

2. Procédé selon la revendication 1, **caractérisé en ce que** ledit identifiant associé à chaque véhicule environnant est déterminé en appliquant une fonction cryptographique à un numéro de plaque d'immatriculation associé audit véhicule environnant.

3. Procédé selon la revendication 1, caractérisé en ce ladite base de données de scores de comportements routiers comprend au moins un score de comportement routier strictement positif, l'étape de détermination d'un score de comportement routier (204) incluant les étapes suivantes :
- déterminer ledit score de comportement routier comme étant le score de comportement enregistré dans ladite base de données si un score de comportement routier y est associé audit identifiant dudit véhicule environnant et à la situation de circulation courante ;
- associer une valeur prédéfinie audit score de comportement routier si aucun score de comportement routier n'est associé dans la base de données audit identifiant et à la situation de circulation courante.

4. Procédé selon l'une quelconque des revendications précédentes, **caractérisé en ce que** le véhicule client est un véhicule connecté disposant d'une technologie de communication véhicule-à-véhicule et l'ensemble de véhicules environnants comprend au moins un véhicule environnant connecté disposant d'une technologie de communication véhicule-à-véhicule et d'une technologie de communication véhicule-à-infrastructure, le procédé comprenant une étape pour transmettre, par ledit au moins un véhicule environnant connecté audit véhicule client, un score de comportement routier dudit véhicule environnant connecté ayant une valeur différente de ladite valeur prédéfinie, en utilisant une communication véhicule-à-véhicule.

5. Procédé selon la revendication 4, **caractérisé en ce que** le procédé comprend une étape d'auto-caractérisation dudit véhicule environnant connecté pour déterminer ledit score de comportement routier en association avec un identifiant dudit véhicule environnant connecté, l'étape d'auto-caractérisation comprenant les sous-étapes consistant à :
- déterminer un identifiant associé au véhicule environnant connecté en appliquant une fonction cryptographique à un numéro de plaque d'immatriculation associé au véhicule environnant connecté ;
- transmettre une requête de caractérisation du comportement routier dudit véhicule environnant connecté au serveur d'aide à la conduite, ladite requête de caractérisation comprenant l'identifiant associé au véhicule environnant connecté, ladite situation courante et ledit contexte horaire courant ;
- déterminer un score de comportement routier associé audit véhicule environnant connecté en utilisant ladite base de données.

6. Procédé selon la revendication 5, **caractérisé en ce que** l'étape de détermination du score de comportement routier associé audit véhicule environnant connecté comprend les étapes suivantes:
- déterminer ledit score de comportement routier comme étant le score de comportement enregistré dans ladite base de données si un score de comportement routier y est associé audit identifiant dudit véhicule environnant connecté et à la situation courante ;
- associer une valeur prédéfinie audit score de comportement routier si aucun score de comportement routier n'est associé dans la base de données audit identifiant et à la situation de circulation courante

7. Procédé selon l'une quelconque des revendications précédentes, **caractérisé en ce que** ladite base de données est préalablement déterminée à l'étape (200), ladite base de données de scores de comportements routiers comprenant au moins un score de comportement routier associé à un identifiant relatif à un véhicule identifié par un véhicule de référence à une situation de circulation donnée et à un contexte horaire donné, l'étape (200) de détermination de ladite base de données comprenant les étapes consistant à :
- déterminer (301) une valeur correspondant au comportement du véhicule identifié à ladite situation de circulation donnée et au contexte horaire donné, ladite valeur étant positive ou négative ;
- déterminer (302) un identifiant en association avec ledit véhicule identifié en appliquant une fonction cryptographique à un numéro de plaque d'immatriculation associé dudit véhicule identifié;
- transmettre (303) une caractérisation du comportement routier dudit véhicule identifié dans ladite situation donnée et le contexte horaire donné audit serveur d'aide à la conduite, ladite caractérisation comprenant ladite valeur, l'identifiant associé audit véhicule identifié, la situation de circulation donnée, et le contexte horaire donné ;
- déterminer (304) un score de comportement routier associé audit identifiant associé audit véhicule identifié dans la situation donnée et le contexte horaire donné en fonction de ladite valeur, ledit score de comportement routier étant déterminé :
- en mettant à jour un score de comportement routier déjà enregistré dans la base de données en association avec ledit identifiant et ladite situation de circulation donnée, ledit score de comportement routier déjà enregistré étant additionné à ladite valeur et étant seuillé par la valeur nulle;
- en créant un nouvel enregistrement dans ladite base de données si ladite valeur est positive et aucun score de comportement routier associé audit identifiant n'est enregistré dans la base de données, le score de comportement routier associé audit identifiant, dans la situation de circulation donnée et le contexte horaire donné étant égal à ladite valeur.

8. Procédé selon l'une quelconque des revendications précédentes, **caractérisé en ce que** ladite situation de circulation donnée est une situation de circulation identifiée parmi un groupe comprenant l'insertion dans une voie, et/ou l'entrée dans une autoroute, et/ou l'entrée dans une voie rapide, et/ou l'entrée dans un rond-point.

9. Système d'aide à la conduite comprenant un véhicule client 101 et un serveur d'aide à la conduite 102, le système étant **caractérisé en ce que** ledit véhicule client 101 est configuré pour :
- identifier un ensemble de véhicules environnants situés dans une zone de voisinage dudit véhicule client à une situation de circulation courante et un contexte horaire courant notamment défini par une information de date et d'heure;
- déterminer un identifiant associé à chaque véhicule environnant;
- transmettre une requête de caractérisation du comportement routier de chaque véhicule environnant audit serveur d'aide à la conduite 102, ladite requête de caractérisation comprenant l'identifiant associé à chaque véhicule environnant, la situation de circulation courante, et le contexte horaire courant ;
- recevoir un score de comportement routier associé à chaque identifiant, ledit score de comportement routier étant déterminé par ledit serveur d'aide à la conduite 102 en utilisant une base de données de scores de comportements routiers;
- déterminer une manoeuvre de conduite en fonction des scores de comportements routiers associés aux identifiants desdits véhicules environnants.

## Patentansprüche

1. Fahrassistenzverfahren eines Client-Fahrzeugs bei der Detektion einer aktuellen Verkehrssituation in einem aktuellen Zeitkontext, der insbesondere von einer Datums- und Uhrzeitinformation definiert ist, wobei das Verfahren **dadurch gekennzeichnet ist, dass** es die Schritte umfasst, die in Folgendem bestehen:
- Ermitteln (201) einer Menge von Umgebungsfahrzeugen, die sich in einem benachbarten Bereich des Client-Fahrzeugs befinden;
- Bestimmen (202) einer Kennung, die jedem Umgebungsfahrzeug zugeordnet ist;
- Übertragen (203) einer Anforderung zur Charakterisierung des Fahrverhaltens jedes Umgebungsfahrzeugs an einen Fahrassistenzserver, wobei die Charakterisierungsanforderung die Kennung, die jedem Umgebungsfahrzeug zugeordnet ist, die aktuelle Verkehrssituation und den aktuellen Zeitkontext umfasst;
- Bestimmen (204) eines Fahrverhaltens-Scores in Verbindung mit jeder Kennung unter Verwendung einer Datenbank von Fahrverhaltens-Scores, wobei jeder Fahrverhaltens-Score in der Datenbank einer Fahrzeugkennung, einer bestimmten Verkehrssituation und einem bestimmten Zeitkontext zugeordnet ist;
- Bestimmen (206) eines Fahrmanövers je nach den Fahrverhaltens-Scores, die den Kennungen der Umgebungsfahrzeuge zugeordnet sind.

2. Verfahren nach Anspruch 1, **dadurch gekennzeichnet, dass** die Kennung, die jedem Umgebungsfahrzeug zugeordnet ist, durch Anwendung einer kryptographischen Funktion auf eine Kennzeichennummer bestimmt wird, die dem Umgebungsfahrzeug zugeordnet ist.

3. Verfahren nach Anspruch 1, **dadurch gekennzeichnet, dass** die Datenbank von Fahrverhaltens-Scores wenigstens einen streng positiven Fahrverhaltens-Score umfasst, wobei der Schritt des Bestimmens eines Fahrverhaltens-Scores (204) die folgenden Schritte beinhaltet:
- Bestimmen des Fahrverhaltens-Scores als der Verhaltens-Score, der in der Datenbank gespeichert ist, wenn ein Fahrverhaltens-Score darin der Kennung des Umgebungsfahrzeugs und der aktuellen Verkehrssituation zugeordnet ist;
- Zuordnen eines vorgegebenen Werts dem Fahrverhaltens-Score, wenn kein Fahrverhaltens-Score in der Datenbank der Kennung und der aktuellen Verkehrssituation zugeordnet ist.

4. Verfahren nach einem der vorhergehenden Ansprüche, **dadurch gekennzeichnet, dass** das Client-Fahrzeug ein vernetztes Fahrzeug ist, das über eine Fahrzeug-zu-Fahrzeug-Kommunikationstechnologie verfügt, und die Menge von Umgebungsfahrzeugen wenigstens ein vernetztes Umgebungsfahrzeug umfasst, das über eine Fahrzeug-zu-Fahrzeug-Kommunikationstechnologie und eine Fahrzeug-zu-Infrastruktur-Kommunikationstechnologie verfügt, wobei das Verfahren einen Schritt zur Übertragung, durch das wenigstens eine vernetzte Umgebungsfahrzeug, eines Fahrverhaltens-Scores des vernetzten Umgebungsfahrzeugs, der einen anderen Wert als der vorgegebene Wert aufweist, an das Client-Fahrzeug unter Verwendung einer Fahrzeugzu-Fahrzeug-Kommunikation umfasst.

5. Verfahren nach Anspruch 4, **dadurch gekennzeichnet, dass** das Verfahren einen Schritt des Selbstcharakterisierens des vernetzten Umgebungsfahrzeugs zur Bestimmung des Fahrverhaltens-Scores in Verbindung mit einer Kennung des vernetzten Umgebungsfahrzeugs umfasst, wobei der Schritt des Selbstcharakterisierens die Unterschritte umfasst, die in Folgendem bestehen:
- Bestimmen einer Kennung, die dem vernetzten Umgebungsfahrzeug zugeordnet ist, durch Anwendung einer kryptographischen Funktion auf eine Kennzeichennummer, die dem vernetzten Umgebungsfahrzeug zugeordnet ist;
- Übertragen einer Anforderung zur Charakterisierung des Fahrverhaltens des vernetzten Umgebungsfahrzeugs an den Fahrassistenzserver, wobei die Charakterisierungsanforderung die Kennung, die dem vernetzten Umgebungsfahrzeug zugeordnet ist, die aktuelle Situation und den aktuellen Zeitkontext umfasst;
- Bestimmen eines Fahrverhaltens-Scores, der dem vernetzten Umgebungsfahrzeug zugeordnet ist, unter Verwendung der Datenbank.

6. Verfahren nach Anspruch 5, **dadurch gekennzeichnet, dass** der Schritt des Bestimmens des Fahrverhaltens-Scores, der dem vernetzten Umgebungsfahrzeug zugeordnet ist, die folgenden Schritte umfasst:
- Bestimmen des Fahrverhaltens-Scores als der Verhaltens-Score, der in der Datenbank gespeichert ist, wenn ein Fahrverhaltens-Score darin der Kennung des vernetzten Umgebungsfahrzeugs und der aktuellen Verkehrssituation zugeordnet ist;
- Zuordnen eines vorgegebenen Werts dem Fahrverhaltens-Score, wenn kein Fahrverhaltens-Score in der Datenbank der Kennung und der aktuellen Verkehrssituation zugeordnet ist.

7. Verfahren nach einem der vorhergehenden Ansprüche, **dadurch gekennzeichnet, dass** die Datenbank vorab in Schritt (200) bestimmt wird, wobei die Datenbank von Fahrverhaltens-Scores wenigstens einen Fahrverhaltens-Score umfasst, der einer Kennung in Bezug auf ein Fahrzeug zugeordnet ist, das von einem Referenzfahrzeug bei einer bestimmten Verkehrssituation und einem bestimmten Zeitkontext ermittelt wird, wobei der Schritt (200) des Bestimmens der Datenbank die Schritte umfasst, die in Folgendem bestehen:
- Bestimmen (301) eines Werts, der dem Verhalten des bei der bestimmten Verkehrssituation und dem bestimmten Zeitkontext ermittelten Fahrzeugs entspricht, wobei der Wert positiv oder negativ ist;
- Bestimmen (302) einer Kennung in Verbindung mit dem ermittelten Fahrzeug durch Anwendung einer kryptographischen Funktion auf eine zugehörige Kennzeichennummer des ermittelten Fahrzeugs;
- Übertragen (303) einer Charakterisierung des Fahrverhaltens des in der bestimmten Situation und dem bestimmten Zeitkontext ermittelten Fahrzeugs an den Fahrassistenzserver, wobei die Charakterisierung den Wert, die Kennung, die dem ermittelten Fahrzeug zugeordnet ist, die bestimmte Verkehrssituation und den bestimmten Zeitkontext umfasst;
- Bestimmen (304) eines Fahrverhaltens-Scores, der der Kennung zugeordnet ist, die dem in der bestimmten Situation und dem bestimmten Zeitkontext ermittelten Fahrzeug zugeordnet ist, je nach dem Wert, wobei der Fahrverhaltens-Score wie folgt bestimmt wird:
- durch Aktualisierung eines Fahrverhaltens-Scores, der bereits in der Datenbank in Verbindung mit der Kennung und der bestimmten Verkehrssituation gespeichert ist, wobei der bereits gespeicherte Fahrverhaltens-Score dem Wert hinzuaddiert wird und durch den Nullwert schwellenwertbehaftet ist;
- durch Erzeugung eines neuen Datensatzes in der Datenbank, wenn der Wert positiv ist und kein Fahrverhaltens-Score, der der Kennung zugeordnet ist, in der Datenbank gespeichert ist, wobei der Fahrverhaltens-Score, der der Kennung zugeordnet ist, in der bestimmten Verkehrssituation und dem bestimmten Zeitkontext gleich dem Wert ist.

8. Verfahren nach einem der vorhergehenden Ansprüche, **dadurch gekennzeichnet, dass** die bestimmte Verkehrssituation eine Verkehrssituation ist, die aus einer Gruppe ermittelt wird, die das Einordnen in eine Spur und/oder das Auffahren auf eine Autobahn und/oder das Auffahren auf eine Schnellstraße und/oder das Einfahren in einen Kreisverkehr umfasst.

9. Fahrassistenzsystem umfassend ein Client-Fahrzeug 101 und einen Fahrassistenzserver 102, wobei das System **dadurch gekennzeichnet ist, dass** das Client-Fahrzeug 101 dazu ausgebildet ist:
- eine Menge von Umgebungsfahrzeugen, die sich in einem benachbarten Bereich des Client-Fahrzeugs befinden, bei einer aktuellen Verkehrssituation und einem aktuellen Zeitkontext zu ermitteln, der insbesondere von einer Datums- und Uhrzeitinformation definiert ist;
- Bestimmen einer Kennung, die jedem Umgebungsfahrzeug zugeordnet ist;
- Übertragen einer Anforderung zur Charakterisierung des Fahrverhaltens jedes Umgebungsfahrzeugs an den Fahrassistenzserver 102, wobei die Charakterisierungsanforderung die Kennung, die jedem Umgebungsfahrzeug zugeordnet ist, die aktuelle Verkehrssituation und den aktuellen Zeitkontext umfasst;
- Empfangen eines Fahrverhaltens-Scores, der jeder Kennung zugeordnet ist, wobei der Fahrverhaltens-Score von dem Fahrassistenzserver 102 unter Verwendung einer Datenbank von Fahrverhaltens-Scores bestimmt wird;
- Bestimmen eines Fahrmanövers je nach den Fahrverhaltens-Scores, die den Kennungen der Umgebungsfahrzeuge zugeordnet sind.

## Claims

1. Method for assisting with driving a client vehicle upon detection of a current driving situation in a current time context, particularly defined by date and time information, the method being **characterized in that** it comprises the following steps of:
- identifying (201) a set of surrounding vehicles located in a neighbouring area of said client vehicle;
- determining (202) an identifier associated with each surrounding vehicle;
- transmitting (203) a request for characterizing the driving behaviour of each surrounding vehicle to a driving assistance server, said characterization request comprising the identifier associated with each surrounding vehicle, the current driving situation, and the current time context;
- determining (204) a driving behaviour score in association with each identifier using a database of driving behaviour scores, with each driving behaviour score in the database being associated with a vehicle identifier, in a given driving situation and in a given time context;
- determining (206) a driving manoeuvre as a function of the driving behaviour scores associated with the identifiers of said surrounding vehicles.

2. Method according to Claim 1, **characterized in that** said identifier associated with each surrounding vehicle is determined by applying a cryptographic function to a licence plate number associated with said surrounding vehicle.

3. Method according to Claim 1, **characterized in that** said database of driving behaviour scores comprises at least one strictly positive driving behaviour score, the step (204) of determining a driving behaviour score including the following steps:
- determining said driving behaviour score as being the behaviour score saved in said database if a driving behaviour score is associated therein with said identifier of said surrounding vehicle and with the current driving situation;
- associating a predefined value with said driving behaviour score if no driving behaviour score is associated in the database with said identifier and with the current driving situation.

4. Method according to any one of the preceding claims, **characterized in that** the client vehicle is a connected vehicle having vehicle-to-vehicle communication technology and the set of surrounding vehicles comprises at least one connected surrounding vehicle having vehicle-to-vehicle communication technology and vehicle-to-infrastructure communication technology, the method comprising a step of transmitting, by said at least one connected surrounding vehicle to said client vehicle, a driving behaviour score of said connected surrounding vehicle with a value different from said predefined value, using vehicle-to-vehicle communication.

5. Method according to Claim 4, **characterized in that** the method comprises a step of self-characterizing said connected surrounding vehicle in order to determine said driving behaviour score in association with an identifier of said connected surrounding vehicle, the step of self-characterizing comprising the following sub-steps of:
- determining an identifier associated with the connected surrounding vehicle by applying a cryptographic function to a licence plate number associated with the connected surrounding vehicle;
- transmitting a request for characterizing the driving behaviour of said connected surrounding vehicle to the driving assistance server, said characterization request comprising the identifier associated with the connected surrounding vehicle, said current situation and said current time context;
- determining a driving behaviour score associated with said connected surrounding vehicle using said database.

6. Method according to Claim 5, **characterized in that** the step of determining the driving behaviour score associated with said connected surrounding vehicle comprises the following steps of:
- determining said driving behaviour score as being the behaviour score saved in said database if a driving behaviour score is associated therein with said identifier of said connected surrounding vehicle and with the current situation;
- associating a predefined value with said driving behaviour score if no driving behaviour score is associated in the database with said identifier and with the current driving situation.

7. Method according to any one of the preceding claims, **characterized in that** said database is previously determined in step (200), said database of driving behaviour scores comprising at least one driving behaviour score associated with an identifier relating to a vehicle identified by a reference vehicle for a given driving situation and for a given time context, the step (200) of determining said database comprising the following steps of:
- determining (301) a value corresponding to the behaviour of the vehicle identified in said given driving situation and in the given time context, said value being positive or negative;
- determining (302) an identifier associated with said identified vehicle by applying a cryptographic function to a licence plate number associated with said identified vehicle;
- transmitting (303) a characterization of the driving behaviour of said identified vehicle in said given situation and the given time context to said driving assistance server, said characterization comprising said value, the identifier associated with said identified vehicle, the given driving situation, and the given time context;
- determining (304) a driving behaviour score associated with said identifier associated with said identified vehicle in the given situation and the given time context as a function of said value, said driving behaviour score being determined:
- by updating a driving behaviour score already saved in the database in association with said identifier and said given driving situation, said already saved driving behaviour score being added to said value and being thresholded by the zero value;
- by creating a new record in said database if said value is positive and no driving behaviour score associated with said identifier is saved in the database, with the driving behaviour score associated with said identifier, in the given driving situation and the given time context, being equal to said value.

8. Method according to any one of the preceding claims, **characterized in that** said given driving situation is a driving situation identified from among a group comprising getting into a lane, and/or joining a highway, and/or joining a fast lane, and/or entering a roundabout.

9. Driving assistance system comprising a client vehicle 101 and a driving assistance server 102, the system being **characterized in that** said client vehicle 101 is configured for:
- identifying a set of surrounding vehicles located in a neighbouring area of said client vehicle in a current driving situation and a current time context, particularly defined by date and time information;
- determining an identifier associated with each surrounding vehicle;
- transmitting a request for characterizing the driving behaviour of each surrounding vehicle to said driving assistance server 102, said characterization request comprising the identifier associated with each surrounding vehicle, the current driving situation, and the current time context;
- receiving a driving behaviour score associated with each identifier, said driving behaviour score being determined by said driving assistance server 102 using a database of driving behaviour scores;
- determining a driving manoeuvre as a function of the driving behaviour scores associated with the identifiers of said surrounding vehicles.
